# EUROPEAN PATENT APPLICATION

(11) **EP 3 616 975 A1**
(43) Date of publication of application: **04.03.2020**
(21) Application number: 17934587.1
(22) Date of filing: 28.12.2017
(51) Int. Cl.: B60L 9/30

(54) **MULTI-SYSTEM EMU HIGH-VOLTAGE POWER SUPPLY SYSTEM AND TRAIN**

(30) Priority: 13.12.2017 CN 201711331023
(71) Applicant: CRRC Changchun Railway Vehicles Co., Ltd., Changchun, Jilin 130000 (CN)
(72) Inventor: HA, Dalei, Jilin 130000 (CN); LIU, Zhengwei, Jilin 130000 (CN); XU, Meng, Jilin 130000 (CN)
(74) Representative: Behr, Wolfgang
(86) International application number: PCT/CN2017/119208
(87) International publication number: WO 2019/114039

(57) **Abstract**

Provided is a multi-system EMU high-voltage power supply system, comprising: a DC pantograph and an AC pantograph for obtaining from the power supply network a supply of power from the corresponding system; an isolating switch connected to the DC pantograph, wherein, it disconnects the DC pantograph when determining that a current of the non-DC system power supply flows therethrough; a DC high-voltage box connected to the isolating switch for disconnecting the isolating switch when detecting that the voltage and current flowing through do not meet the DC power supply requirement; an AC high-voltage box, connected to the AC pantograph, for detecting whether the voltage and current flowing through meet the AC power supply requirement, and disconnecting the AC pantograph when the AC power supply requirement is not met. Further provided is a train using the above-described multi-system EMU high-voltage power supply system. The present invention can switch between the electric energy of different systems to supply power to train equipment, and thus train changes are not required when crossing from one region into another.

## Description

This application claims the priority to Chinese Patent Application No. 201711331023.0, titled "MULTI-SYSTEM EMU HIGH-VOLTAGE POWER SUPPLY SYSTEM AND TRAIN", filed on December 13, 2017 with the State Intellectual Property Office of People's Republic of China, which is incorporated herein by reference in its entirety.

### FIELD

The present disclosure relates to the technical field of train power supply, and in particular to a multi-mode high-voltage power supply system for a multiple-unit train and a train.

### BACKGROUND

Multiple-unit trains and high speed rails have been increasingly developed in China. As one of the "new four great inventions" of China which gradually influence the world, multiple-unit trains and high speed rails are receiving increasing attention and recognition from other countries while meeting domestic demand due to advanced technologies, satisfactory service and excellent travel experience. Under this circumstance, purchase orders from other countries for multiple-unit trains and high speed rails are received.

However, the multiple-unit train and the high speed rail exported to a target country is required to conform to standards of the target country for related parameters, such as the power supply mode, the width of the rail and the signal system, due to difference in the geographical position, cultural custom, special requirements formed in a special period and other factors in different countries. Therefore, it is necessary for those skilled in the art to focus on how to adapt devices which are used in the multiple-unit train and the high speed rail in China to the exported train, such that the export train operates in the target country with the same excellent performance as in China.

Therefore, it is an issue to be solved by those skilled in the art to provide a multi-mode high-voltage power supply system for a multiple-unit train which can utilize power in two power supply modes and is capable of detecting the power supply mode thereby avoiding any danger.

### SUMMARY

The object of the present disclosure is to provide a multi-mode high-voltage power supply system for a multiple-unit train, which is capable of supplying power to train devices using electrical powers in different power supply modes provided in different regions, detecting whether power in a wrong mode is provided, and informing an upper level device if power in a wrong mode is provided to adjust the connected circuit. The multi-mode high-voltage power supply system for a multiple-unit train can adapt to the situation where two power supply modes exist, thereby eliminating the necessity for replacing the train when the train is to cross a boundary between different regions, thus the passenger's travel experience can be improved significantly.

Another object of the present disclosure is to provide a train equipped with the above multi-mode high-voltage power supply system for a multiple-unit train.

To achieve the above object, a multi-mode high-voltage power supply system for a multiple-unit train is provided, which includes:
a direct current pantograph configured to obtain direct current power from a power supply catenary;
an alternating current pantograph configured to obtain alternating current power from the power supply catenary;
an isolation switch connected with the direct current pantograph, and configured to determine whether power which is not in a direct current mode is supplied, and break the connection with the direct current pantograph in a case that power which is not in the direct current mode is supplied;
a direct current high-voltage box connected with the isolation switch, and configured to detect whether a voltage and a current inputted into the direct current high-voltage box meet a direct current power supply requirement, and break the connection with the isolation switch in a case that the voltage and the current inputted into the direct current high-voltage box do not meet the direct current power supply requirement; and
an alternating current high-voltage box connected with the alternating current pantograph, and configured to detect whether a voltage and a current inputted into the alternating current high-voltage box meet an alternating current power supply requirement, and break the connection with the alternating current pantograph in a case that the voltage and the current inputted into the alternating current high-voltage box do not meet the alternating current power supply requirement.

Optionally, the direct current pantograph may be capable of withstanding the alternating current power.

Optionally, the isolation switch may include:
an overcurrent detection device connected with the direct current pantograph, and configured to detect whether a current inputted into the overcurrent detection device is outside a preset range, and send an overcurrent alarm signal in a case that the current inputted into the overcurrent detection device is outside the preset range; and
an overcurrent protection device connected with the overcurrent detection device, and configured to break the connection with the overcurrent detection device on reception of the overcurrent alarm signal.

Optionally, the direct current high-voltage box may include:
a direct current voltage transformer connected with the isolation switch, and configured to detect whether a voltage inputted into the direct current voltage transformer meets a direct current voltage requirement, and send a voltage warning signal in a case that the voltage inputted into the direct current voltage transformer does not meet the direct current voltage requirement;
a direct current current transformer connected with the isolation switch and the direct current voltage transformer, and configured to detect whether a current inputted into the direct current current transformer meets a direct current current requirement, send a current warning signal in a case that the current inputted into the direct current current transformer does not meet the direct current current requirement, and transmit the voltage warning signal; and
a high speed circuit breaker connected with the direct current current transformer, and configured to break the connection with the isolation switch in a case that one of the voltage warning signal and the current warning signal is received.

Optionally, the multi-mode high-voltage power supply system for a multiple-unit train may further include:
a traction transformer connected with the alternating current high-voltage box, and configured to reduce an alternating current power supply voltage transmitted from the alternating current high-voltage box; and
a traction auxiliary current transformer having an input terminal connected with the traction transformer and an output terminal connected with a traction motor, and configured to perform an auxiliary current transformation on power transmitted from the traction transformer to obtain a traction voltage to be used by the traction motor.

Optionally, the traction auxiliary current transformer may include:
a rectifier configured to rectify the power transmitted from the traction transformer to obtain a rectified voltage; and
an inverter connected with the rectifier, and configured to convert the rectified voltage to the traction voltage to be used by the traction motor.

Optionally, the inverter may be further connected with the direct current high-voltage box, and may be configured to convert direct current power transmitted from the direct current high-voltage box to the traction voltage to be used by the traction motor.

Optionally, the multi-mode high-voltage power supply system for a multiple-unit train may further include:
an alert device connected with the overcurrent detection device, and configured to convert a received overcurrent alarm signal to an alert signal.

Optionally, the direct current pantograph may be a 750V direct current pantograph, a 1.5KV direct current pantograph or a 3KV direct current pantograph.

To achieve the above object, a train is further provided according to the present disclosure. The train includes: a train body, train power consumption devices and a train power supply system, where the train power supply system is provided with the multi-mode high-voltage power supply system as described above.

The multi-mode high-voltage power supply system for a multiple-unit train provided according to the present disclosure includes: a direct current pantograph configured to obtain direct current power from a power supply catenary; an alternating current pantograph configured to obtain alternating current power from the power supply catenary; an isolation switch connected with the direct current pantograph, and configured to determine whether power which is not in a direct current mode is supplied, and break the connection with the direct current pantograph in a case that power which is not in the direct current mode is supplied; a direct current high-voltage box connected with the isolation switch, and configured to detect whether a voltage and a current inputted into the direct current high-voltage box meet a direct current power supply requirement, and break the connection with the isolation switch in a case that the voltage and the current inputted into the direct current high-voltage box do not meet the direct current power supply requirement; and an alternating current high-voltage box connected with the alternating current pantograph, and configured to detect whether a voltage and a current inputted into the alternating current high-voltage box meet an alternating current power supply requirement, and break the connection with the alternating current pantograph in a case that the voltage and the current inputted into the alternating current high-voltage box do not meet the alternating current power supply requirement.

Obviously, according to the technical solution of the present disclosure, the train is equipped with another power supply device which can utilizing the direct current power in addition to the original alternating current power supply device, to adapt to the special conditions of the target country, thereby changing the present situation that a train conforming to a certain standard needs to be replaced when passing the boundary between regions where power supply of different modes are provided. In addition, the possibility of power in a wrong mode being supplied is fully considered, where an isolation switch provided for preventing a device which cannot withstand a high voltage from being damaged by a high voltage being wrongly supplied. The multi-mode high-voltage power supply system for a multiple-unit train can adapt to the situation where two power supply modes exist, thereby eliminating the necessity for replacing the train when the train is to cross a boundary between different regions, thus the passenger's travel experience can be improved significantly. A train including a train body, train power consumption devices and a train power supply system is provided according to the present disclosure, where the train power supply system is provided with the above multi-mode high-voltage power supply system. The train also has the above beneficial effects, and is not repeatedly described here.

### BRIEF DESCRIPTION OF THE DRAWINGS

The drawings to be used in the description of the embodiments of the application or the conventional technology will be described briefly as follows, so that the technical solutions according to the embodiments of the present application or according to the conventional technology will become clearer. It is apparent that the drawings in the following description only illustrate some embodiments of the present disclosure. For those skilled in the art, other drawings may be obtained according to these drawings without any creative work.

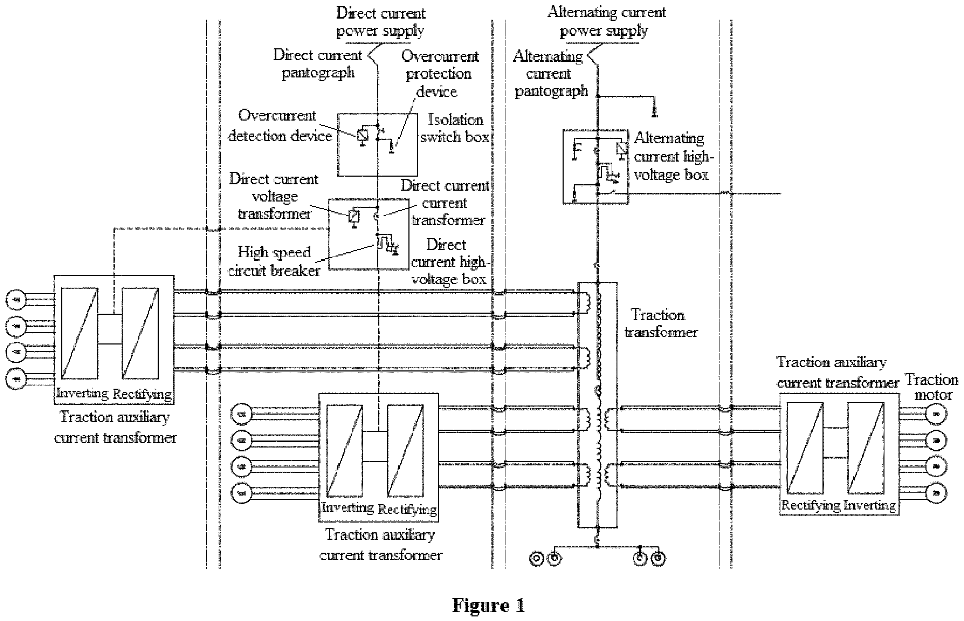

Figure 1 is a schematic diagram illustrating a circuit of a multi-mode high-voltage power supply system for a multiple-unit train according to an embodiment of the disclosure.

### DETAILED DESCRIPTION OF EMBODIMENTS

The core of the present disclosure is to provide a multi-mode high-voltage power supply system for a multiple-unit train and a train. The multi-mode high-voltage power supply system for a multiple-unit train is capable of supplying power to train devices using electrical powers in different modes provided in different regions, detecting whether power in a wrong mode is provided, and informing an upper level device if power in a wrong mode is provided to adjust the connected circuit. The multi-mode high-voltage power supply system for a multiple-unit train can adapt to the situation where two power supply modes exist, thereby eliminating the necessity for replacing the train when the train is to cross a boundary between different regions, thus the passenger's travel experience can be improved significantly.

In order that the objectives, technical solutions and advantages of the present disclosure can be clearer, the technical solution according to the embodiments of the present disclosure will be described clearly and completely as follows in conjunction with the drawings. It is apparent that the described embodiments are only a few rather than all of the embodiments according to the present disclosure. Any other embodiments obtained by those skilled in the art based on the embodiments in the present a disclosure without any creative work fall in the scope of the present disclosure.

Reference is made to Figure 1, which is a schematic diagram illustrating a circuit of a multi-mode high-voltage power supply system for a multiple-unit train according to an embodiment of the disclosure.

The multi-mode high-voltage power supply system for a multiple-unit train includes a direct current pantograph, an alternating current pantograph, an isolation switch, a direct current high-voltage box, and an alternating current high-voltage box.
The direct current pantograph is configured to obtain direct current power from a power supply catenary
The alternating current pantograph is configured to obtain alternating current power from the power supply catenary

A pantograph is an electrical device used by an electric traction locomotive such as a high-speed train or a multiple-unit train to obtain power from a power supply catenary, and is generally installed on the roof of the locomotive or the multiple-unit train. The pantograph may be categorized into two types: a single-arm pantograph and a double-arm pantograph, each of which includes a slide plate, an upper frame, a lower arm (a lower frame in the double-arm pantograph), a base frame, a pantograph raising spring, a transmission cylinder and a support insulator and the like. According to the present disclosure, a direct current pantograph is additionally provided on the basis of an original alternating current pantograph according to specific requirements of the target country, as shown in Figure 1. Configuration of the two pantographs may be determined according to specific settings of the power supply catenary in the target country. For example, the two pantograph may be arranged one behind the other, or may be arranged at the same horizontal level, or the like, which is not limited in the present disclosure, and may be selected according to the actual condition.

Different direct current modes are currently used in different countries. For example, there are 750V direct current power supply, 1.5KV direct current power supply, 3KV direct current power supply, and the like, while 25KV alternating current power supply is commonly used. Correspondingly, there are a 750V direct current pantograph, a 1.5KV direct current pantograph, a 3KV direct current pantograph and a 25KV alternating current pantograph, where the voltage value represents a power supply voltage that can be withstood by the pantograph for a long period of time, and a power supply voltage higher the voltage value cannot be withstood by the pantograph for a long period of time since the pantograph does not operate normally at the power supply voltage higher the voltage value.

Since there are two power supply modes, for example, 3KV direct current power supply and 25KV alternative current power supply, there is a possibility that the 25KV alternating current power is wrongly obtained by the 3KV direct current pantograph. Therefore, the 3KV direct current pantograph needs to be capable of withstanding the 25KV alternating current power. The 3KV direct current pantograph is damaged on reception of the 25KV alternating current power if the 3KV direct current pantograph cannot withstand the 25KV alternating current power, in which case the 3KV direct current power supply cannot be used, and the train cannot travel in the region where the 3KV direct current power supply is used. Of course, it is unnecessary for the 3KV direct current pantograph to withstand the 25KV alternating current power for a long period of time, since a component subsequently breaks the connection with the 3KV direct current pantograph on detection of the wrong power supply mode.

The isolation switch is connected with the direct current pantograph, and is configured to determine whether non-direct current power is supplied, and break the connection with the direct current pantograph in a case that non-direct current power is supplied.

The isolation switch includes an overcurrent detection device and an overcurrent protection device.

The overcurrent detection device is connected with the direct current pantograph, and is configured to detect whether a current inputted into the overcurrent detection device is outside a preset range, and send an overcurrent alarm signal in a case that the current inputted into the overcurrent detection device is outside the preset range.

The overcurrent protection device is connected with the overcurrent detection device, and is configured to break the connection with the overcurrent detection device on reception of the overcurrent alarm signal.

The isolation switch which includes the overcurrent detection device and the overcurrent protection device is connected with the direct current pantograph. The overcurrent detection device is used for determining whether a current from the direct current pantograph is outside a preset current range for the direct current power supply, and issuing the overcurrent alarm signal on detection of the current inputted into overcurrent protection device being outside the preset current range. The overcurrent protection device automatically breaks the connection with the overcurrent detection device on reception of the overcurrent alarm signal.

Only the overcurrent detection is performed to determine whether an alternating current power supply is wrongly connected, since in the field of train power supply, the current from the alternating current power supply is far greater than the current from the direct current power supply, and the circumstance where the current from the alternating current power supply is smaller than the current from the direct current power supply does not occur. Specifically, various components can be used for performing overcurrent detection, and can be selected flexibly to obtain the most suitable component. The overcurrent protection device may be a direct current arrester or the like.

Further, the overcurrent alarm signal can be transmitted to a train cab such that a train driver changes the power supply mode in time on reception of the overcurrent alarm signal, thereby disconnecting the power supply in the wrong mode in the first place, such that the direct current pantograph does not have to withstand the high voltage alternating current power for a long period of time, thereby extending the service life of the components. The overcurrent detection device may further be connected with an alert device. The alert device sends different alert signals according to the type of received alarm signal, such that the driver can make a judgment easily without being distracted, thereby avoiding driving errors due to distraction.

The direct current high-voltage box is connected with the isolation switch, and is configured to detect whether a voltage and a current inputted into the direct current high-voltage box meet a direct current power supply requirement, and break the connection with the isolation switch in a case that the voltage and the current inputted into the direct current high-voltage box do not meet the direct current power supply requirement.

The alternating current high-voltage box is connected with the alternating current pantograph, and is configured to detect whether a voltage and a current inputted into the alternating current high-voltage box meet an alternating current power supply requirement, and break the connection with the alternating current pantograph in a case that the voltage and the current inputted into the alternating current high-voltage box do not meet the alternating current power supply requirement.

Each of the direct current high-voltage box and the alternating current high-voltage box functions to detect whether a voltage and a current inputted into the direct current high-voltage box or the alternating current high-voltage box meet the power supply requirement for a corresponding power supply mode, and break the connection with an upper layer device if the voltage or the current inputted into the direct current high-voltage box or the alternating current high-voltage box does not meet the power supply requirement for the corresponding power supply mode. The voltage or the current failing to meet the power supply requirement for the corresponding power supply mode indicates that wrong power is transmitted, for which there are various reasons, such as a fault of an intermediate component, abnormal power supply from an upper level component, and the like. It is necessary to perform detection again at the direct current high-voltage box and the alternating current high-voltage box, since undesirable power cannot be further processed normally and eventually converted to the traction force for driving the train to travel.

The direct current high-voltage box includes a direct current voltage transformer, a direct current current transformer, and a high speed circuit breaker.

The direct current voltage transformer is connected with the isolation switch, and is configured to detect whether a voltage inputted into the direct current voltage transformer meets a direct current voltage requirement, and send a voltage warning signal in a case that the voltage inputted into the direct current voltage transformer does not meet the direct current voltage requirement.

The direct current current transformer is connected with the isolation switch and the direct current voltage transformer, and is configured to detect whether a current inputted into the direct current current transformer meets a direct current current requirement, send a current warning signal in a case that the current inputted into the direct current current transformer does not meet the direct current current requirement, and transmit the voltage warning signal.

The high speed circuit breaker is connected with the direct current current transformer, and is configured to break the connection with the isolation switch in a case that one of the voltage warning signal and the current warning signal is received.

The components in the alternating current high-voltage box for the alternating current power supply are similar to corresponding components in the direct current high-voltage box, as long as the corresponding components are replaced by alternative current components, such as an alternating current current transformer, alternating current voltage transformer, and the like.

Furthermore, in addition to the above devices, the multi-mode high-voltage power supply system for a multiple-unit train needs to be provided with lower layer processing devices, which may include a traction transformer and a traction auxiliary current transformer.

The traction transformer is connected with the alternating current high-voltage box, and is configured to reduce an alternating current power supply voltage transmitted from the alternating current high-voltage box.

The traction auxiliary current transformer has an input terminal connected with the traction transformer and an output terminal connected with a traction motor, and is configured to perform an auxiliary current transformation on power transmitted from the traction transformer to obtain a traction voltage to be used by the traction motor.

The traction motor is configured to convert a traction voltage to a corresponding traction force.

The traction auxiliary converter includes a rectifier and an inverter.

The rectifier is configured to rectify the power transmitted from the traction transformer to obtain a rectified voltage.

The inverter is connected with the rectifier, and is configured to convert the rectified voltage to the traction voltage to be used by the traction motor.

The inverter is further connected with the direct current high-voltage box. Since the voltage of the direct current power transmitted from the direct current high-voltage box is not as high as the voltage of the alternating current power, the voltage of the direct current power does not need to be processed by the traction transformer and the rectifier as the alternating current power, and can be directly inputted into the inverter and converted to the traction voltage used by the traction motor.

It should be noted that the above components included in the multi-mode high-voltage power supply system for a multiple-unit train can be implemented with various components having the above functions, of which specific specifications and models can be adapted according to requirements of different train manufactures, which are not limited herein.

Based on the above embodiment, a train including a car body, train power consumption devices and a train power supply system is further provided according to the present disclosure. The train power supply system is provided with the above multi-mode high-voltage power supply system.

Based on the above technical solution, a multi-mode high-voltage power supply system for a multiple-unit train is provided according to the present disclosure. The train is equipped with another power supply device which can utilizing the direct current power in addition to the original alternating current power supply device, thereby changing the present situation that a train conforming to a certain standard needs to be replaced when passing the boundary between regions where power supply of different modes are provided. In addition, the possibility of power in a wrong mode being supplied is fully considered, where an isolation switch provided for preventing a device which cannot withstand a high voltage from being damaged by a high voltage being wrongly supplied. The multi-mode high-voltage power supply system for a multiple-unit train can adapt to the situation where two power supply modes exist, thereby eliminating the necessity for replacing the train when the train is to cross a boundary between different regions, thus the passenger's travel experience can be improved significantly.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

It may be known by those skilled in the art that, exemplary units and algorithm steps described in conjunction with the embodiments disclosed herein can be realized by electronic hardware, computer software or a combination thereof. In order to clearly illustrate interchangeability of the hardware and the software, steps and composition of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the application.

The principles and implementations are clarified using specific embodiments herein. The above description of the embodiments is only intended to help understanding the method of the present disclosure and the key concept thereof. It should be noted that, numerous improvements and modifications can be made to the present disclosure by those skilled in the art without deviation from the scope of the present disclosure. These improvements and modifications should fall within the scope of protection of the present disclosure.

It should be further noted that the relationship terminologies such as "first", "second" and the like are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including a plurality of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A multi-mode high-voltage power supply system for a multiple-unit train, comprising:
a direct current pantograph configured to obtain direct current power from a power supply catenary;
an alternating current pantograph configured to obtain alternating current power from the power supply catenary;
an isolation switch connected with the direct current pantograph, and configured to determine whether non-direct current power is supplied, and break the connection with the direct current pantograph in a case that non-direct current power is supplied;
a direct current high-voltage box connected with the isolation switch, and configured to detect whether a voltage and a current inputted into the direct current high-voltage box meet a direct current power supply requirement, and break the connection with the isolation switch in a case that the voltage and the current inputted into the direct current high-voltage box do not meet the direct current power supply requirement; and
an alternating current high-voltage box connected with the alternating current pantograph, and configured to detect whether a voltage and a current inputted into the alternating current high-voltage box meet an alternating current power supply requirement, and break the connection with the alternating current pantograph in a case that the voltage and the current inputted into the alternating current high-voltage box do not meet the alternating current power supply requirement.

2. The multi-mode high-voltage power supply system for a multiple-unit train according to claim 1, wherein the direct current pantograph is capable of withstanding the alternating current power.

3. The multi-mode high-voltage power supply system for a multiple-unit train according to claim 2, wherein the isolation switch comprises:
an overcurrent detection device connected with the direct current pantograph, and configured to detect whether a current inputted into the overcurrent detection device is outside a preset range, and send an overcurrent alarm signal in a case that the current inputted into the overcurrent detection device is outside the preset range; and
an overcurrent protection device connected with the overcurrent detection device, and configured to break the connection with the overcurrent detection device on reception of the overcurrent alarm signal.

4. The multi-mode high-voltage power supply system for a multiple-unit train according to claim 3, wherein the direct current high-voltage box comprises:
a direct current voltage transformer connected with the isolation switch, and configured to detect whether a voltage inputted into the direct current voltage transformer meets a direct current voltage requirement, and send a voltage warning signal in a case that the voltage inputted into the direct current voltage transformer does not meet the direct current voltage requirement;
a direct current current transformer connected with the isolation switch and the direct current voltage transformer, and configured to detect whether a current inputted into the direct current current transformer meets a direct current current requirement, send a current warning signal in a case that the current inputted into the direct current current transformer does not meet the direct current current requirement, and transmit the voltage warning signal; and
a high speed circuit breaker connected with the direct current current transformer, and configured to break the connection with the isolation switch in a case that one of the voltage warning signal and the current warning signal is received.

5. The multi-mode high-voltage power supply system for a multiple-unit train according to claim 4, further comprising:
a traction transformer connected with the alternating current high-voltage box, and configured to reduce an alternating current power supply voltage transmitted from the alternating current high-voltage box; and
a traction auxiliary current transformer having an input terminal connected with the traction transformer and an output terminal connected with a traction motor, and configured to perform an auxiliary current transformation on power transmitted from the traction transformer to obtain a traction voltage to be used by the traction motor.

6. The multi-mode high-voltage power supply system for a multiple-unit train according to claim 5, wherein the traction auxiliary current transformer comprises:
a rectifier configured to rectify the power transmitted from the traction transformer to obtain a rectified voltage; and
an inverter connected with the rectifier, and configured to convert the rectified voltage to the traction voltage to be used by the traction motor.

7. The multi-mode high-voltage power supply system for a multiple-unit train according to claim 6, wherein the inverter is further connected with the direct current high-voltage box, and is configured to convert direct current power transmitted from the direct current high-voltage box to the traction voltage to be used by the traction motor.

8. The multi-mode high-voltage power supply system for a multiple-unit train according to claim 7, further comprises:
an alert device connected with the alternative-direct current detection device, and configured to convert a received overcurrent alarm signal to an alert signal.

9. The multi-mode high-voltage power supply system for a multiple-unit train according to claim 8, wherein the direct current pantograph is a 750V direct current pantograph, a 1.5KV direct current pantograph or a 3KV direct current pantograph.

10. A train, comprising a train body, train power consumption devices and a train power supply system, wherein the train power supply system is provided with the multi-mode high-voltage power supply system according to any one of claims 1 to 9.
